(19) **Europäisches Patentamt / European Patent Office / Office européen des brevets**

(11) **EP 2 017 738 A1**

(12) # EUROPEAN PATENT APPLICATION

(43) Date of publication:
21.01.2009 Bulletin 2009/04

(51) Int Cl.:
*G06F 12/08* (2006.01)

(21) Application number: 08251130.4

(22) Date of filing: 27.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 29.06.2007 US 771774

(71) Applicant: Intel Corporation
Santa Clara, CA 95052 (US)

(72) Inventors:
• Singhal, Abhishek
Beaverton, OR 97006 (US)
• Osbourne, Randy
Beaverton, OR 97006 (US)

(74) Representative: Beresford, Keith Denis Lewis
BERESFORD & Co.
16 High Holborn
London
WC1V 6BX (GB)

(54) **Hierarchical cache tag architecture**

(57) An apparatus, system, and method are disclosed. In one embodiment, the apparatus includes a cache memory coupled to a processor. The apparatus additionally includes a tag storage structure that is coupled to the cache memory. The tag storage structure can store a tag associated with a location in the cache memory. The apparatus additionally includes a cache of cache tags coupled to the processor. The cache of cache tags can store a smaller subset of the tags stored in the tag storage structure.

FIG. 1

## EP 2 017 738 A1

**Description**

### FIELD OF THE INVENTION

The invention relates to cache tag storage. More specifically, the invention relates

### GLOSSARY OF TERMS

The following is a brief glossary of terms used herein. The supplied definitions are applicable throughout the specification and the claims, unless the term is clearly used in another manner.

Tag Storage Structure: A storage structure that stores the tag and other related information (ex. state information, LRU information, ECC information) for every entry in a cache memory.

Cache of Cache Tags: A cache to store a subset tags stored in the tag storage structure.

Index: The portion of the address in a memory request that points to a specific set of tags in a tag storage structure.

Tag: The portion of the address in a memory request that points to a specific memory address location that is unique for the particular index portion.

### BACKGROUND OF THE INVENTION

Processors of all kinds have become more dependent on caches due to the relatively slow speed of memory in relation to the speed of a processor core. Numerous cache architectures have been utilized for decades. One common cache architecture is a set associative cache. Cache architectures have memory storage that stores data from system memory locations as well as a tag storage structure that stores sets of tags.

In standard cache hierarchy architecture, the closer to the processor core(s) a cache is located, generally, the smaller and faster the cache becomes. The smallest and fastest cache(s) generally reside on the processor core Silicon die. On the other hand, the largest cache (LLC or last level cache) or caches sometimes reside off-die from the processor core(s). Accessing data that resides in an off-die cache as opposed to an on-die cache generally creates additional latency since it takes longer for the data to be transmitted to the processor core(s).

Each cache has a tag storage structure. If the processor needs data from a certain memory location, it can determine if the data is stored in a given cache by doing a comparison of the memory location address and the tag storage structure for the cache. If the tag storage structure is off-die, the latency to do a tag lookup will be greater than if the tag storage structure is on-die. Thus, on-die tag storage structures increase the cost of the processor die because they take up valuable space, but they help speed up execution by reducing the latencies of tag lookups versus off-die caches.

In many embodiments, a cache stores data by the cache line (e.g. 64 bytes). In other embodiments, a cache stores data by some other measurable unit. In an example embodiment where the cache stores data by the cache line, the tag storage structure signifies the particular memory locations represented by cache lines stored within the cache. Additionally, the tag storage structure also stores state information to identify whether the stored cache line has been modified, is invalid, etc. One example of state information is MESI (modified, exclusive, shared, or invalid) information utilized by many caches. The tag storage structure also stores cache replacement policy information to assist with the determination of which cache line to evict in case replacement of an existing cache line is required. LRU (least recently used) bits is a common technique that is employed and requires information on the relative age of the cache line (versus other stored cache lines) be kept, though other replacement policy techniques exist and could be utilized. The tag storage structure also may store error correction information (ECC) for each set of tags, though ECC information is not required. The LRU information and the ECC information only need to be stored per set, whereas the tag information and the state information need to be stored per tag (i.e. per way).

For example, a 256 Megabyte (MB) 4-way set associative cache with 64 Byte cache lines in a 40-bit address space can require 9.5MB of tag storage space:

$$\textit{(14b tag + 2b state) X 4M tags + (8b ECC + 4b LRU)/set X 1M ways = 9.5MB}$$

If this tag storage structure is located on the processor die, the 9.5M amount of storage space could add significant burden to the cost of manufacturing the processor. 9.5M of information stored in gates takes up a substantial amount of space on a processor's Silicon die. To reduce the cost burden on the processor die and still allow the determination of cache and misses, partial tag storage structures have been introduced and are used occasionally.

Partial tags only store a portion of the tag information (e.g. 8 bits instead of all 14 bits of the tag) to save die space. Such architectures are optimized for quick determination of a cache-miss. But, to determine a cache-hit, the full tag from main memory would still need to be accessed. Thus, if there is a cache miss with a partial-tag look up, it is known that the data should be retrieved from system memory; however, in case of a cache hit one still needs to access the actual tag from the tag storage structure that stores information on all tags.

## BRIEF DESCRIPTION OF THE DRAWINGS

The present invention is illustrated by way of example and is not limited by the accompanying drawings, in which like references indicate similar elements, and in which:

**Figure 1** describes one embodiment of an apparatus to implement a cache of cache tags.
**Figure 2** describes one embodiment of the tag address structure as well as the cache of cache tags set structure and an individual tag address entry in the cache of cache tags in a N-way set associative configuration.
**Figure 3** is a flow diagram of one embodiment of a process to utilize a cache of cache tags to store a subset of the set of tags associated with a cache memory.
**Figure 4** describes a flow diagram of one embodiment of a process to utilize a cache of cache tags.

## DETAILED DESCRIPTION OF THE INVENTION

Embodiments of an apparatus, system, and method to implement a cache of cache tags are described. In the following description, numerous specific details are set forth. However, it is understood that embodiments may be practiced without these specific details. In other instances, well-known elements, specifications, and protocols have not been discussed in detail in order to avoid obscuring the present invention.

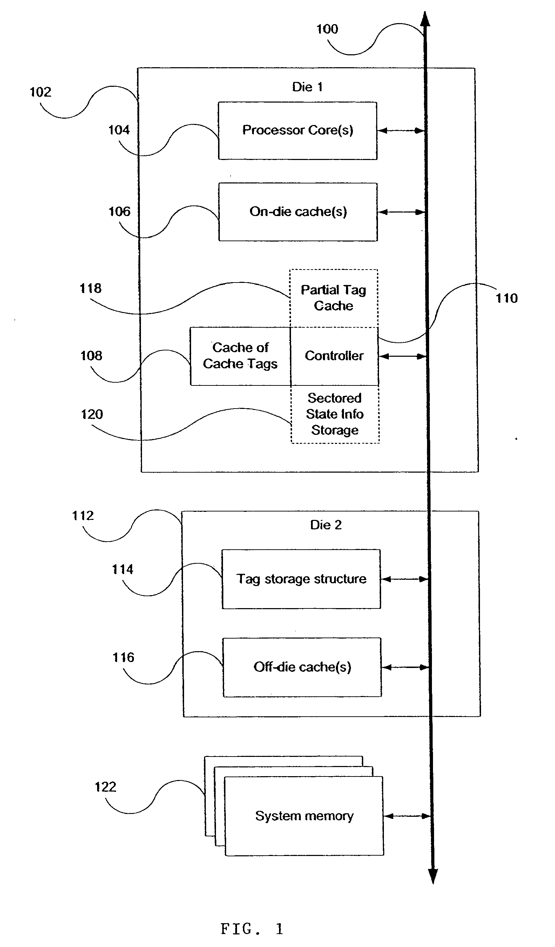

**Figure 1** describes one embodiment of an apparatus and system to implement a cache of cache tags. One or more processor cores 104 reside on a microprocessor Silicon die 102 (Die 1) in many embodiments. In other multiprocessor embodiments, there can be multiple processor dies coupled together, each including one or more cores per die (the architecture for processor cores on multiple dies is not shown in Figure 1). Returning to Figure 1, the processor core(s) are coupled to an interconnect 100. In different embodiments, the processor core(s) 104 may be any type of central processing unit (CPU) designed for use in any form of personal computer, handheld device, server, workstation, or other computing device available today. The single interconnect 100 is shown for ease of explanation so as to not obscure the invention. In practice, this single interconnect may be comprised of multiple interconnects coupling different individual devices together. Additionally, in many embodiments, more devices may be coupled to the interconnect that are not shown (e.g. a chipset).

The processor core(s) 104 are coupled, through the interconnect 100, to one or more on-die caches 106 physically located on the same die as the processor core(s) 104.

In many embodiments, a cache has a tag storage structure 114 associated with it that stores tags for all cache memory locations. In many embodiments, the tag storage structure 114 resides on a separate Silicon die (Die 2) 112 from the processor core(s) 104. In many embodiments, the tag storage structure 114 is coupled to one or more off-die (non-processor die) cache(s) 116 through the interconnect 100 and is located on the same die as the off-die cache(s) 116.

A cache of cache tags 108 stores a subset of the off-die cache tags on the processor die 102. Specifically, while the tag storage structure 114 stores all index values and associated tag sets per index value, the cache of cache tags 108, on the other hand, does not store all possible index values. Rather, to save on storage space, the cache of cache tags 108 stores a subset of the tags that is stored in the tag storage structure 114. In most embodiments, not all index locations are represented at any given time in the cache of cache tags 108.

In some embodiments, for each matched tag between a tag stored in the cache of cache tags 108 and the tag storage structure 114, information from all ways of a set is needed. In other embodiments, the cache of cache tags 108 stores the tags of less than all ways. In one embodiment, the storage requirements of a set are 9.5 Bytes, which includes tag information, state information, eviction/cache replacement policy information (LRU), and ECC information (if ECC is used). The specific details regarding the tag, state, LRU information, and ECC components are discussed in greater detail in the background section. In some embodiments, the cache of cache tags utilizes a replacement policy that is different than the LRU policy. Specifically, the following information would be stored in a cache of cache tags set:

$$(14\text{-}bit\ tag + 2\text{-}bit\ state)\ X\ 4\ ways + 4\text{-}bit\ LRU + 8\text{-}bit\ ECC = 9.5\ Bytes$$

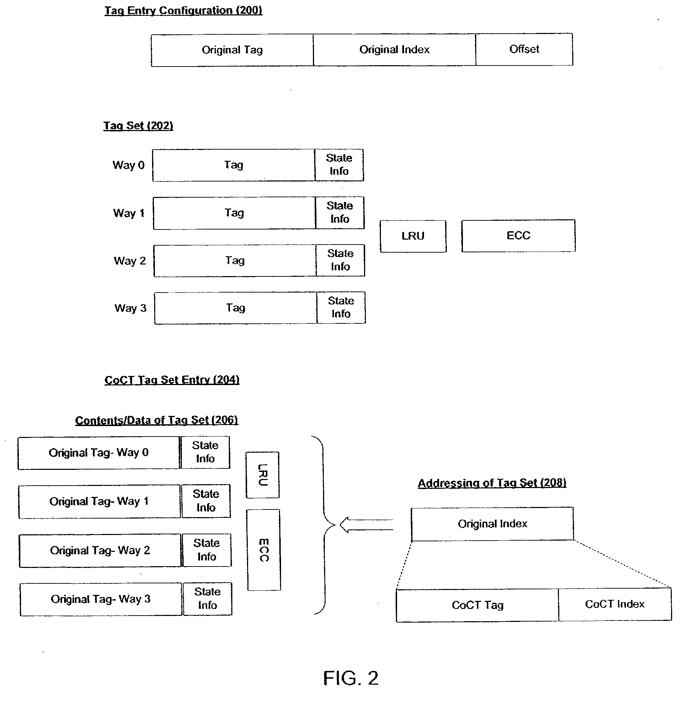

To store 2K (2^11) sets in the cache of cache tags, the storage requirement would then be 19K (2K * 9.5B). The specifics of the entries in the cache of cache tags is discussed in reference to Figure 2 below. Thus, an embodiment of a cache of cache tags can reside on the processor die to perform lookups of the most recently used tags and the burden to the die is 19K. A 19K storage size cost on-die is a much smaller storage burden than the 9.5M size of a full tag storage structure.

In many embodiments, the cache of cache tags 108 is itself an N-way set associative cache. Additionally, in many embodiments, the cache of cache tags 108 stores the most recent accessed tags. The cache of cache tags 108 is coupled to the interconnect 100. In some embodiments, a controller 110 controlling the access to the cache of cache tags 108 determines when a memory request matches a tag that is currently located within the cache of cache tags 108 and reports this back to the processor. In different embodiments, the memory request may originate from one of a number of devices in the system, such as one of the processor cores or a bus master I/O device among other possible memory request originators.

Each memory request (i.e. memory access) includes an address to a specific location within system memory. The tag storage structure 114 includes all tag sets associated with specific locations in the off-die cache memory 116.

Thus, when a memory request is received by the controller 110, the controller 110 parses out the index and tag fields in the memory request address and then checks to see if the index of the tag associated with the specific memory location is stored within the cache-of-cache tags 108. If the original index is stored, then the controller 110 next checks if the original tag associated with the memory location is stored within the cache of cache tags 108 in one of the ways at the original index location.

If the original tag is located in entry associated with 108 the original index location, then the result is that the memory request is a cache of cache tags 108 tag hit (i.e. cache hit). If the original tag is not stored at the index location in the tag storage structure 114, then the result is that the memory request is a cache of cache tags 108 tag miss. This also is a cache miss if the tags from all ways of a set are cached.

On the other hand, if the controller 110 does not find the original index stored in the cache of cache tags 108 on initial lookup, the result is that the memory request is a cache of cache tags 108 index miss. In this case, the controller 110 must fetch and then insert the original index value from the memory request into the cache of cache tags 108 by replacing an index currently stored in the cache of cache tags 108. In some embodiments, where CoCT is itself an associative cache, the replacement policy is a least recently used policy where the least recently used index value is replaced. In other embodiments, other standard replacement policy schemes may be utilized to replace the index value in the cache of cache tags 108.

Once the new index value has been inserted into the cache of cache tags 108, then the controller 110 would need to determine if the specific tag associated with the memory request is currently stored in the tag storage structure 114 at the index location. If so, then the result is a tag hit in the tag storage structure 114 and the controller 110 needs to input tag information into the cache of cache tags 108 at the new index position for all ways stored in the tag storage structure 114 at the index position.

Otherwise, the result is a tag miss in the tag storage structure 114 and the controller 110 needs to initiate the replacement of the least recently used tag (in one of the ways at the index location in the tag storage structure 114) with the tag associated with the memory request. This replacement inputs the data located at the address of the memory request from system memory into the cache memory and inputs the original tag from the memory request into the tag storage structure 114. Once the tag is input into the tag storage structure from system memory, then, in some embodiments, the controller 110 can initiate the replacement of all ways in the cache of cache tags 108 (at the index value) with the tags from each way at the index value that are currently stored in the tag storage structure 114. In other embodiments, the replacement replaces less than all ways in the cache of cache tags 108.

In some embodiments, the off-die memory access size is not the same as the cache of cache tag entry size. If the off-die memory access size is smaller than the cache of cache tag entry size, the controller may send multiple requests to fetch the data. On the other hand, if the off-die memory access size is larger than the cache of cache tag entry size, the controller 110 may have additional data it does not need. In this case, the controller 110 may discard the excess data in some embodiments.

In other embodiments, the controller 110 may have a small associated memory (not pictured) that would allow the controller 110 to intelligently prefetch portions of the excess data and store it within the associated memory for potential future use. For example, if the original cache tag size is 4-bytes, and the original cache tag associativity is 8 ways, the entry in the cache of cache tags 108 would need to be 32-bytes in size to store all associated ways (4-bytes X 8 ways = 32-byte tag set entry). Now, assume that the fetch command to get information from the tag storage structure 114 receives 64-bytes at a time. In this example, the controller 110 would fetch the 32-bytes required to store an entire cache of cache tags set entry as well as an additional 32-bytes of adjacent data. In the embodiments that utilize a small associated memory, the adjacent 32-bytes of data that were fetched may be stored in a small associated memory on or near the controller 110 to act as a small prefetch buffer. Because, in some cases, many subsequent accesses are to adjacent memory locations, it is probable that the adjacent 32-bytes will be requested on the next transaction or in the near future. Thus, the small adjacent memory would allow for intelligent prefetching of tag sets for future cache of cache tags 108 operations.

Furthermore, the small associated memory also may be utilized as a victim cache. In a victim cache embodiment, the small associated memory may store the most recently evicted tags in the cache of cache tags 108 in case one or more of these tags are subsequently accessed again.

Additionally, the controller 110 may combine multiple requests to fetch cache of cache tags 108 entry data into one request. For example, multiple cache of cache tags 108 index fetches can be combined into one fetch.

In some alternative embodiments, a partial tag cache 118 is utilized in addition to the cache of cache tags 108. The partial tag cache 118, as described above in the background section, does not store all tag bits and, thus, can only determine a cache miss with certainty, not a cache hit. Cache-of-cache tags, on the other hand can only determine a cache-hit with certainty and not a cache-miss. In the aforementioned alternative embodiments that utilize a partial tag cache 118 as well as the cache of cache tags 108, the partial tag cache 118 may be utilized to make a quick determination of cache misses and the cache of cache tags 108 may be utilized to make a quick determination of page hits. In these embodiments, the controller 110 may simultaneously initiate a lookup in the partial tag cache 118 and in the cache of cache tags 108. In the event the partial tag cache 118 determined a page miss, the information from the cache of cache tags would be discarded. However, in the event of a page hit, the required tag potentially could be found on-die in the cache of cache tags 108 and saving an off-die access latency penalty.

In some embodiments, the cache memory is a sectored cache. In sectored cache embodiments, the overall tag storage requirements in the tag storage structure 114 are lessened because each tag is shared by multiple cache entries (e.g. cache sub-blocks).

In these sectored cache embodiments, the storage requirements for state information is increased because, for each tag, there must be state information for each potential entry associated with the tag (state information is discussed in the background section as well as in the discussion related to Figure 2). For example, if a tag is 14 bits, in a non-sectored cache, 2-bits of state information would be included per sector. In an 8-way sectored cache, there are 8 cache entries associated with each tag, thus, there would need to be 2-bits X 8 or 16-bits of state information included per tag. In this example, the state information takes up more space than the tag information.

To reduce the state information storage impact in a sectored cache, a set of common state information patterns would be stored in a sectored state information storage 120. The sectored state information storage 120 may be coupled to the controller 110 in many embodiments. In our example, the sectored state information storage 120 would store multiple patterns of 16-bits. In some embodiments, the multiple patterns would include the most common patterns and would be predetermined and permanent within the sectored state information storage 120. In other embodiments, logic within the controller 110 would dynamically determine the most common patterns of state information utilized and modify the stored patterns accordingly.

Certain state information patterns are more common than others. Consider the common linearity of memory accesses. If a number of memory requests arrived at the controller 110 and they were all in a linear address pattern, the state information bits would show a very reliable modification pattern of perhaps all "1's".

Therefore, instead of storing 16-bits of state information for each tag, the controller could store, for example, a 6-bit pointer to a state information pattern in the sectored state information storage 120. A 6-bit pointer would allow 64 state information patterns ($2^6$) to be stored in the sectored state information storage 120. Thus, if the pattern is common, the controller could store the 6-bit pointer with the tag instead of the 16-bit state information pattern, in this example.

Additionally, as mentioned above, system memory 122 is coupled to the interconnect 100 beyond the off-die cache(s) 116 in many embodiments. This allows data from the memory location to be accessed in the event that none of the on-die and off-die caches are storing the targeted data (and targeted tag).

Figure 2 describes one embodiment of the tag address structure as well as the cache of cache tags set structure and an individual tag address entry in the cache of cache tags in a N-way set associative configuration.

In many embodiments, a memory access request to a 40-bit address space would include the following pieces of information in the 40-bit address field: the original tag field, the original index field, and the offset field. Typically, only the original tag field is stored within a tag entry 200 stored in the tag storage structure. Using the 40-bit addressing example with a 64 Byte cache line size in a direct-mapped (1-way associative) cache of 256M, an example of the size of each field in the address might include a 12-bit original tag, a 22-bit index, and a 6-bit offset. The 22-bit index field is a pointer to a specific indexed location in the tag storage structure.. The 12-bit original tag can be the highest 12 bits of the actual memory address. The size of the tag is also determined by its associativity and cache line size. In the example described in the background section, a 256MB 4-way set associative cache with 64 Byte cache lines will have a 20-bit index field and 4M tags ($2^{20}$ x 4), where each tag is 14 bits in size.

Figure 2 also describes an embodiment of a tag set 202. The tag set 202 for a 4-way set associative cache stores four tags. Each way (Way 0-3) stores a specific tag as well as a specific amount of state information related to the cache entry associated with the each tag. State information is specific per tag, thus, there must be state information bits associated with each tag. Additionally, the tag set also must include the cache replacement policy information, such as LRU bits or other LRU-type information, to inform the controller which of the four tags is due for eviction when a new tag must be stored. Finally, error correction code (ECC) bits may also are utilized per set to minimize the storage errors of the tag set. For example, as mentioned above, the storage requirements of a set can be 9.5 Bytes, which includes the following information:

$$\textit{(14 bit tag + 2 bit state) X 4 ways + 4 bit LRU + 8 bit ECC = 9.5 Bytes}$$

Figure 2 also describes an embodiment of a tag set entry stored within the cache of cache tags (CoCT Tag Set Entry 204). Set associative caches are generally popular for many types of cache configurations. Thus, in many embodiments, the cache is a multi-way set associative cache. Therefore, an entry in the cache of cache tags must store tag information for all ways of the cache at the particular index location (Contents/Data of Tag Set 206). In these embodiments, the index field (Addressing of Tag Set 208) from the original address (e.g. the 40-bit address configuration as discussed above) points to the location of a set of tags stored within the cache of cache tags. In some embodiments, the cache of cache tags structure itself is also stored in a set associative manner. Thus, the original index field is divided up into a cache of cache tags tag field as well as a cache of cache tags index field to allow for fetching a set within the cache of cache tags. For example, using a 20-bit original index field from the 40-bit address, the upper 12 bits of the original index field may be utilized as the tag field in a set associative cache of cache tags. In this example, the lower 8 bits of the original index field may be utilized as the index field in a cache of cache tags.

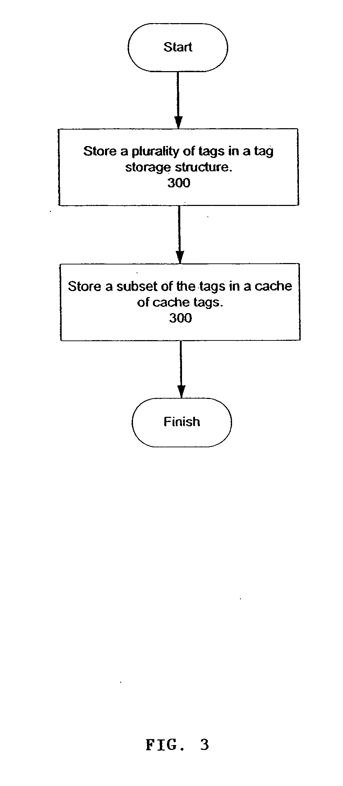

**Figure 3** is a flow diagram of one embodiment of a process to utilize a cache of cache tags to store a subset of the set of tags associated with a cache memory. The process is performed by processing logic that may comprise hardware (circuitry, dedicated logic, etc.), software (such as is run on a general purpose computer system or a dedicated machine), or a combination of both. Referring to Figure 3, the process begins by processing logic storing a plurality of tags in a tag storage structure (processing block 300). In many embodiments, each tag is associated with a data location stored within a cache memory. The full set of tags stored within the storage structure account for all data locations in the cache memory. The cache memory may be any general purpose or special purpose cache on a computer system or other computer-related device. In many embodiments, the cache memory is located in a computer system with one or more processor core(s). In many embodiments, the cache memory is located on a separate Silicon die from the processor core(s). Also, in many embodiments, the tag storage structure is located on the same Silicon die as the cache memory.

Returning to Figure 3, processing logic next stores a subset of the tags stored in the tag storage structure in a cache of cache tags (processing block 302). In many embodiments, the cache of cache tags only stores a small portion of the full set of tags stored in the tag storage structure. For instance, in the example embodiment described above in reference to the background as well as Figure 1, for a 4-way set associative 256MB cache memory with 64 Byte cache lines, there are 4M (2^22) tags stored in the tag storage structure. Whereas, the cache of cache tags may store a fraction of this, such as, for example 8K (2^13) tags. In many embodiments, the cache of cache tags stores tags from the tag storage structure in a most recently used manner where the most recently requested memory locations are the locations whose tags are stored within the cache of cache tags.

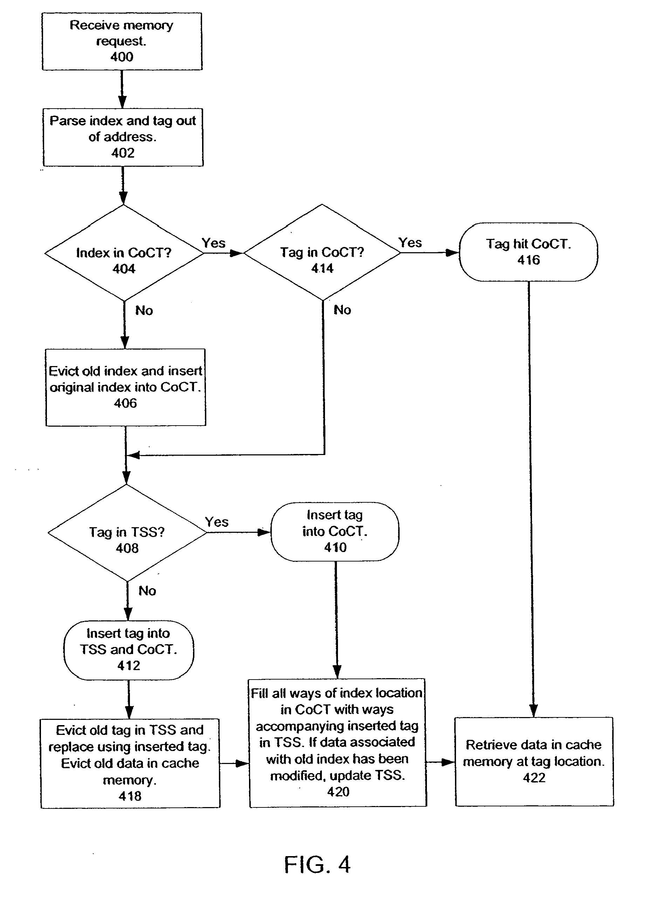

Whereas, Figure 3 describes the general process for what the cache of cache tags stores in relation to the tag storage structure, **Figure 4** describes a flow diagram of one embodiment of a process to utilize a cache of cache tags. The process is performed by processing logic that may comprise hardware (circuitry, dedicated logic, etc.), software (such as is run on a general purpose computer system or a dedicated machine), or a combination of both. Referring to Figure 4, the process begins by processing logic receiving a memory request (processing block 400). The memory request includes the address of a memory location. In many embodiments, the upper bits of the address correspond to the tag of the memory location and the middle bits of the address correspond to an index into a tag storage structure that is associated with a cache memory. The specific details regarding the tag field and index field are described above in reference to Figure 2.

In different embodiments, the memory request may originate from one of a number of devices in the system, such as one of the processor cores or a bus master I/O device among other possible memory request originators. The memory request is eventually filtered to a controller that controls a cache of cache tags (CoCT in Figure 4). Then processing logic within the controller parses the original index value and the original tag value out of the address of the memory request (processing block 402).

Once the original index and original tag within the memory request are known, then processing logic determines if the original index is currently being stored in the cache of cache tags (processing block 404). If the original index is not currently being stored in the cache of cache tags, then there is an index miss in the cache of cache tags and processing logic may insert the original index into the cache of cache tags (processing block 406). In many embodiments, the original index is inserted into a location in the cache of cache tags that is freed up by replacing (evicting) the least recently used stored index value. In some embodiments, processing logic can fetch the index and then allocate and insert the index.

In other embodiments, processing logic can allocate the space first, and then fetch the index and insert.

If the index being evicted has been updated since it was brought into the cache of cache tags, then this index must be written back to its original storage location.

If the original index is inserted into the cache of cache tags, processing logic is aware that the original tag will not be in the cache of cache tags since the only chance it could have been there was if the original index was already stored in the cache of cache tags. Thus, processing logic must determine if the original tag is in the tag storage structure (TSS in Figure 4) (processing block 408). The original tag will be in the tag storage structure only if the data from the location in memory that the memory request points to is currently stored in the cache that is referenced by the tag storage structure. If the original tag is in the tag storage structure, then processing logic fetches and then inserts the original tag into the cache of cache tags (processing block 410). When the original tag is inserted into the cache of cache tags, processing logic may copy the tags from all ways at the index value in the tag storage structure (the tag set), not just the way that stores the original tag itself (processing block 420). In other embodiments, processing logic may copy less than the tags from all the ways at the index value in the tag storage structure. Finally, processing logic reads data in the cache memory associated with the tag to complete the memory request (processing block 422).

Otherwise, if the original tag is not in the tag storage structure, processing logic is now aware that the data pointed to by the address in the memory request is not in the cache at all, rather, the data is in main system memory. In this case, processing logic must insert the original tag into the tag storage structure (in the same manner as tags normally are inserted into the tag storage structure during normal cache operation) and processing logic may also insert the tag set that includes the original tag into the cache of cache tags (processing block 412). In this example, processing logic must perform additional processing steps to insert the tag. In some embodiments, this result will cause processing logic to evict an old tag in the TSS using the current eviction policy to determine which old tag to evict, and replace the old tag with the original tag to be inserted (processing block 418). Next processing logic, as mentioned above, may insert the entire set of ways associated with the original index when inserting tags into the cache of cache tags structure (processing block 420). In other embodiments, tags associated with less than the entire set of ways at the original index are inserted into the cache of cache tags structure. Finally, processing logic reads data in the cache memory associated with the tag to complete the memory request (processing block 422).

Returning to processing block 404, if the original index is in the cache of cache tags, then processing logic must determine whether the original tag is in the cache of cache tags (processing block 414). If the original tag is not stored in the cache of cache tags, then processing logic continues on to processing block 408 (described above).

Alternatively, if the original tag is stored in the cache of cache tags, then processing logic verifies that there is a original tag hit in the cache of cache tags (processing block 416). In this embodiment, processing logic can read data in the cache memory associated with the tag to complete the memory request (processing block 422) and proceed accordingly. To insert the original index into cache of cache tags it is possible that an existing index (old index) entry might have to be replaced. If the data associated with this entry is in modified state, then processing logic also updates the tag storage structure at the location where the tag storage structure is storing the tags associated with the replaced index that were modified in the cache of cache tags.

Thus, embodiments of an apparatus, system, and method to implement a cache of cache tags are described. These embodiments have been described with reference to specific exemplary embodiments thereof. It will be evident to persons having the benefit of this disclosure that various modifications and changes may be made to these embodiments without departing from the broader spirit and scope of the embodiments described herein. The specification and drawings are, accordingly, to be regarded in an illustrative rather than a restrictive sense.

**Claims**

1. An apparatus, comprising:

   a cache memory coupled to a processor;
   a tag storage structure, coupled to the cache memory, the tag storage structure to store a plurality of tags, wherein each tag is associated with a data location stored within the cache memory; and
   a cache of cache tags, coupled to the processor, the cache of cache tags to store a subset of one or more of the plurality of tags stored in the tag storage structure.

2. The apparatus of claim 1, wherein the processor and the cache of cache tags are located on a same Silicon die.

3. The apparatus of claim 2, wherein the tag storage structure is located on a different Silicon die from the processor.

4. The apparatus of claim 3, wherein the cache of cache tags contains one or more of the most recently used tags stored in the tag storage structure.

5. The apparatus of claim 3, further comprising a partial tag cache coupled to the processor, wherein the partial tag cache determines when a memory request results in a cache miss and the cache of cache tags determines when the memory request results in a cache hit.

6. The apparatus of claim 1, wherein the cache of cache tags is a multi-way associative cache.

7. The apparatus of claim 1, further comprising a controller, coupled to the processor, the controller to determine the occurrence of a tag match, wherein the tag match occurs when a original tag associated with a memory request is equal to a stored tag in a location being checked for the tag match.

8. The apparatus of claim 7, wherein the controller is further operable to
determine an original index from an address in the memory request; and
insert the original index into the cache of cache tags by overwriting an index currently in the cache of cache tags, when the original index is not already in the cache of cache tags.

9. The apparatus of claim 8, wherein the controller is further operable to
check for the tag match in the cache of cache tags when the original index from the memory request is located in the cache of cache tags;
check for the tag match in the tag storage structure when the original index from the memory request is not located in the cache of cache tags; and
retrieve the original tag from a system memory when there is not a tag match in the cache of cache tags nor a tag match in the tag storage structure.

10. The apparatus of claim 9, wherein the controller is further operable to
insert the original tag into the cache of cache tags when there is not a tag match in the cache of cache tags; and
inserting the original tag into the tag storage structure when there is not a tag match in the tag storage structure.

11. The apparatus of claim 7, wherein the controller and the processor are located on a same silicon die.

12. The apparatus of claim 7, wherein the cache memory is a sectored cache.

13. The apparatus of claim 12, wherein the apparatus further comprises a sectored state information storage unit, coupled to the controller, the sectored state information storage unit to store a plurality of common state information patterns.

14. The apparatus of claim 13, wherein the controller is further operable to store a pointer to a common state information pattern stored in the sectored state information storage unit in place of a set of state information bits associated with a tag in the cache of cache tags.

15. A system, comprising:

an interconnect;
a processor, located on a first silicon die, coupled to the interconnect;
a cache memory, located on a second silicon die, coupled to the interconnect;
a tag storage structure, located on the second silicon die, coupled to the interconnect, the tag storage structure to store a plurality of tags, wherein each tag is associated with a data location stored within the cache memory; and
a cache of cache tags, located on the first silicon die, coupled to the interconnect, the cache of cache tags to store a subset of one or more of the plurality of tags stored in the tag storage structure.

16. The system of claim 15, wherein the cache of cache tags contains one or more of the most recently used tags stored in the tag storage structure.

17. The system of claim 15, wherein the system further comprises a partial tag cache coupled to the processor, wherein the partial tag cache determines when a memory request results in a cache miss and the cache of cache tags determines when the memory request results in a cache hit.

18. The system of claim 15, wherein the size of each tag stored in the tag storage structure is the same as the size of each tag stored in the cache of cache tags.

19. The system of claim 15, wherein the system further comprises a controller, coupled to the processor, the controller to determine the occurrence of a tag match, wherein the tag match occurs when a original tag associated with a memory request is equal to a stored tag in a location being checked for the tag match.

20. The system of claim 19, wherein the controller is further operable to
determine an original index from an address in the memory request; and
insert the original index into the cache of cache tags by overwriting an index currently in the cache of cache tags when the original index is not already in the cache of cache tags.

21. The system of claim 20, wherein the controller is further operable to
check for the tag match in the cache of cache tags when the original index from the memory request is located in the cache of cache tags;
check for the tag match in the tag storage structure when the original index from the memory request is not located in the cache of cache tags; and
retrieve the original tag from a system memory when there is not a tag match in the cache of cache tags nor a tag match in the tag storage structure.

22. The system of claim 21, wherein the controller is further operable to
insert the original tag into the cache of cache tags when there is not a tag match in the cache of cache tags; and
inserting the original tag into the tag storage structure when there is not a tag match in the tag storage structure.

23. A method, comprising:

storing a plurality of tags in a tag storage structure, wherein each tag is associated with a data location stored within a cache memory, the cache memory coupled to a processor; and
storing a subset of one or more of the plurality of tags, but less than all of the plurality of tags, stored in the tag storage structure in a cache of cache tags.

24. The method of claim 23, wherein the cache of cache tags contains one or more of the most recently used tags stored in the tag storage structure.

25. The method of claim 24, further comprising determining the occurrence of a tag match, wherein the tag match occurs when a original tag associated with a memory request is equal to a stored tag in a location being checked for the tag match.

26. The method of claim 25, further comprising:

determining an original index from an address in the memory request; and
inserting the original index into the cache of cache tags by overwriting an index currently in the cache of cache tags when the original index is not already in the cache of cache tags.

27. The method of claim 26, further comprising:

checking for the tag match in the cache of cache tags when the original index from the memory request is located in the cache of cache tags;
checking for the tag match in the tag storage structure when the original index from the memory request is not located in the cache of cache tags; and
retrieving the original tag from a system memory when there is not a tag match in the cache of cache tags nor a tag match in the tag storage structure.

28. The method of claim 27, further comprising:

inserting the original tag into the cache of cache tags when there is not a tag match in the cache of cache tags; and
inserting the original tag into the tag storage structure when there is not a tag match in the tag storage structure.

100

102

Die 1

104 — Processor Core(s)

106 — On-die cache(s)

118 — Partial Tag Cache

110

108 — Cache of Cache Tags | Controller

120 — Sectored State Info Storage

112

Die 2

114 — Tag storage structure

116 — Off-die cache(s)

122 — System memory

FIG. 1

**Tag Entry Configuration (200)**

| Original Tag | Original Index | Offset |
|---|---|---|

**Tag Set (202)**

**CoCT Tag Set Entry (204)**

**Contents/Data of Tag Set (206)**

**Addressing of Tag Set (208)**

FIG. 2

```
            ┌─────────┐
            │  Start  │
            └────┬────┘
                 │
                 ▼
    ┌───────────────────────────┐
    │ Store a plurality of tags  │
    │     in a tag storage       │
    │        structure.          │
    │           300              │
    └─────────────┬─────────────┘
                  │
                  ▼
    ┌───────────────────────────┐
    │ Store a subset of the tags │
    │    in a cache of cache     │
    │          tags.             │
    │           300              │
    └─────────────┬─────────────┘
                  │
                  ▼
            ┌─────────┐
            │ Finish  │
            └─────────┘
```

FIG. 3

Receive memory
request.
400

↓

Parse index and tag out
of address.
402

↓

Index in CoCT?
404 — Yes → Tag in CoCT?
414 — Yes → Tag hit CoCT.
416

No ↓ (from 404)

Evict old index and insert
original index into CoCT.
406

No ↓ (from 414)

↓

Tag in TSS?
408 — Yes → Insert tag
into CoCT.
410

No ↓

Insert tag into
TSS and CoCT.
412

↓

Evict old tag in TSS and
replace using inserted tag.
Evict old data in cache
memory.
418

Fill all ways of index location
in CoCT with ways
accompanying inserted tag
in TSS. If data associated
with old index has been
modified, update TSS.
420

Retrieve data in cache
memory at tag location.
422

FIG. 4

13

Europäisches Patentamt

European Patent Office

Office européen des brevets

**EUROPEAN SEARCH REPORT**

Application Number

EP 08 25 1130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/31593 A (SUN MICROSYSTEMS INC [US]) 24 June 1999 (1999-06-24)<br><br>* page 6, line 10 - line 14 *<br>* page 8, line 17 - line 28 *<br>* page 9, line 24 - line 25 *<br>* page 12, line 22 - line 23 *<br>* page 16, line 16 - line 20 *<br>* claims 3,16,29,31 *<br>* figures 1-3 * | 1-4, 6-11,15, 16,19-28 | INV. G06F12/08 |
| Y | | 5,12,17 | |
| X | US 5 813 031 A (CHOU WEN-HWA [TW] ET AL) 22 September 1998 (1998-09-22)<br>* column 3, line 13 - line 16 *<br>* figure 4 * | 1-3,7, 15,18 | |
| Y | SEZNEC A: "DECOUPLED SECTORED CACHES: CONCILIATING LOW TAG IMPLEMENTATION COST AND LOW MISS RATIO"<br>COMPUTER ARCHITECTURE NEWS, ACM, NEW YORK, NY, US,<br>vol. 22, no. 2, 1 April 1994 (1994-04-01), pages 384-393, XP000450367<br>ISSN: 0163-5964<br>* right-hand column, paragraph 2.2 * | 12 | |
| Y | ANONYMOUS: "Cache directory with partial tag information"<br>RESEARCH DISCLOSURE, MASON PUBLICATIONS, HAMPSHIRE, GB,<br>vol. 335, no. 14,<br>1 March 1992 (1992-03-01), page 1,<br>XP007117400<br>ISSN: 0374-4353<br>* the whole document * | 5,17 | **TECHNICAL FIELDS SEARCHED (IPC)**<br><br>G06F |

The present search report has been drawn up for all claims

| Place of search | Date of completion of the search | Examiner |
|---|---|---|
| The Hague | 15 October 2008 | Toader, Elena Lidia |

**ANNEX TO THE EUROPEAN SEARCH REPORT
ON EUROPEAN PATENT APPLICATION NO.**

EP 08 25 1130

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2008

| Patent document cited in search report | | Publication date | Patent family member(s) | | Publication date |
|---|---|---|---|---|---|
| WO 9931593 | A | 24-06-1999 | US | 6212602 B1 | 03-04-2001 |
| US 5813031 | A | 22-09-1998 | NONE | | |

EPO FORM P0459

For more details about this annex : see Official Journal of the European Patent Office, No. 12/82